# EUROPEAN PATENT SPECIFICATION

(11) **EP 0 486 255 B1**
(45) Date of publication and mention of the grant of the patent: **23.10.1996**
(21) Application number: 91310422.0
(22) Date of filing: 12.11.1991
(51) Int. Cl.: F16J 15/08

(54) **Metallic gasket**
Metalldichtung
Joint d'étanchéité métallique

(30) Priority: 14.11.1990 JP 306295/90; 31.05.1991 JP 156189/91
(43) Date of publication of application: 20.05.1992
(73) Proprietor: NIPPON GASKET COMPANY Ltd., Higashiosaka-shi, Osaka-fu (JP)
(72) Inventor: Kawaguchi, Shigeru, Daitou-shi, Osaka (JP); Miura, Masahiko, Kawachinagano-shi, Osaka (JP); Kubouchi, Kenji, Hirakata-shi, Osaka (JP); Uemura, Hiroshi, Higashiosaka-shi, Osaka (JP); Inoue, Kunitoshi, Higashiosaka-shi, Osaka (JP)
(74) Representative: Jenkins, Peter David

(56) References cited:
- EP-A- 0 468 526
- US-A- 3 053 544

## Description

This invention relates to a metallic gasket for use in sealing a clearance between the opposed surfaces to be joined together of a cylinder head and a cylinder block.

A gasket formed out of a metal has been used to seal a clearance between opposed surfaces to be joined together of structural members of an engine, such as a cylinder head and a cylinder block.

It has been demanded that a recently-used engine has higher output and smaller weight. Under the circumstances, a tendency to produce a cylinder and a cylinder block out of an aluminum alloy of a low specific gravity instead of a cast of a high specific gravity which has heretofore been used has been seen. Since an aluminum material has small weight and a low rigidity, the relative displacement of a cylinder head with respect to a cylinder block is apt to increase during an operation of the engine.

However, in the above-described metallic gasket, the rigidity of these structural members becomes low. When the opposed surfaces to be combined together of the structural members are tightened with bolts via a single metallic gasket, the positions in which these bolts are driven scatter in the peripheral portion or the comparatively peripheral portion of the metallic gasket. Therefore, the bolts are not necessarily uniformly distributed around the cylinder bore holes in the gasket, so that the opposed surfaces combined are apt to be imperfectly aligned. As a result, a combustion gas of high temperature and pressure enters the portion of the opposed surfaces joined together which is warped largely, and a bead of the metallic gasket provided between these combined opposed surfaces is corroded and soiled to cause the sealing effect of the gasket to lower.

Moreover, when this metallic gasket is used, the distance between the cylinder head and cylinder block increases and decreases repeatedly during a combustion cycle of the engine, and stress, i.e. mechanical stress and thermal stress are exerted repeatedly on the metallic gasket as well. This load varying stress is large in the portions of the cylinder block and cylinder head which have the lowest rigidity, so that permanent strain and cracks occur in the beads on the gasket to cause the sealing performance to become inferior.

Metallic gaskets which are developed for the purpose of improving their performance of sealing the high-pressure portions to be sealed, i.e. the peripheral portions of through bores, and which include a metallic gasket provided with a layer of a soft metal on the top portions of the beads (refer to, for example, Japanese Utility Model Laid-open No. 145665/1985), and a metallic gasket provided with a spacer (refer to, for example, Japanese Utility Model Laid-open No. 16459/1986), have been proposed.

In all of these metallic gaskets, top portions are formed on the beads provided on the peripheral portions of through bores so as to increase the height of the beads. For example, when such a metallic gasket is tightened between a cylinder head and a cylinder block to bring the opposed surfaces to be combined together of the structural members into pressure contact with each other, the metallic gasket is compressed more tightly by as much as the increase, which is ascribed to the provision of the layer of a soft metal or a spacer, of the height of the beads. Therefore, the improvement in the performance of the metallic gasket of sealing the surfaces combined of the portions of the structural members which are around the cylinder bore holes is expected. If the padding is done on such a metallic gasket by using a soft material, a local pressure imparted to the metallic gasket will be scattered, and the improvement of the sealing performance of the metallic gasket or the protection of the beads will be attained.

However, since the portions of this type of metallic gasket which are provided with a layer of a soft metal or a spacer are limited to the beads, the number of high-pressure portions, i.e. seal portions with respect to the opposed surfaces to be combined does not basically increase, so that it cannot be expected that the sealing performance of the gasket is improved.

A metallic gasket other than these prior art metallic gaskets is also known, in which grommets are attached to the circumferential portions, which are provided with beads projecting therefrom and constitute pressure-contacting portions to be sealed, of cylinder bore holes (refer to, for example, Japanese Patent Laid-open Nos. 101574/1988 and 149479/1988). Even when the grommets attached to the circumferential portions of the cylinder bore holes in this metallic gasket are exposed to a fluid of high temperature and pressure, such as a combustion gas, the sealing performance of the gasket is not deteriorated. Even if the leakage should occur in the grommets, the beads prevent the fluid from flowing out. Although this metallic gasket has a function of correcting the imperfect alignment of the opposed surfaces to be combined in addition to the fluid sealing function of the beads, the operation for attaching grommets to the circumferential portions of the cylinder bore holes involves troublesome work, such as the manufacturing of grommets, the fitting of the grommets around the circumferences of the cylinder bore holes and the deformation-controlling of the grommets, and causes the manufacturing cost to increase.

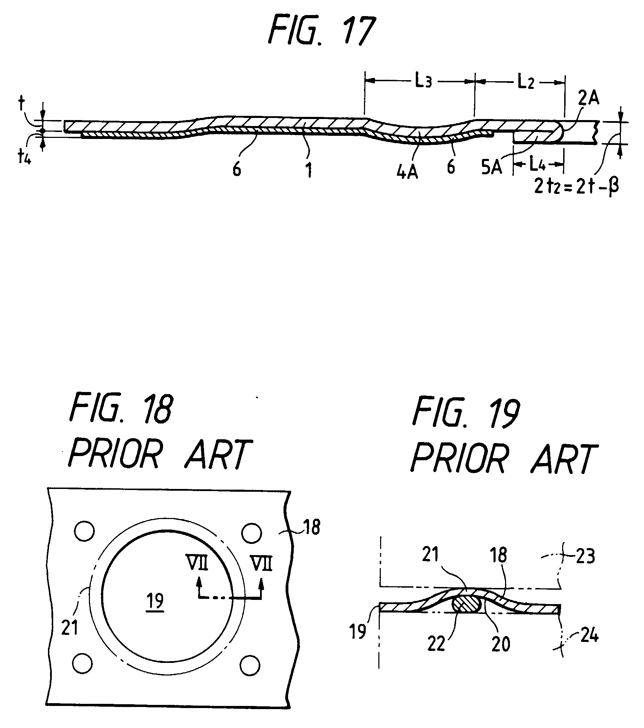

For example, Japanese Patent Laid-open No. 101573/1988 discloses a metallic gasket shown in Figs. 18 and 19. This metallic gasket 18 is adapted to seal the clearance between the opposed surfaces to be combined of a cylinder head 23 and a cylinder block 24, and provided with a bead 21 projecting from the portion which constitutes a pressure-contacting surface to be sealed, and which is around a cylinder bore hole 19, and a seal member 22 in a valley portion 20 formed in the bead 21. A clearance is formed in the part of the valley portion 20 in the bead 21 which is around the seal member 22, so that the seal member 22 can be deformed elastically at large when the opposed surfaces to be combined are tightened.

However, in this metallic gasket 18, the number of sealing contact portions with respect to the opposed surfaces to be combined on both sides of the metallic gasket 18 does not increase in the positions which are spaced differently away from the cylinder bore holes 19 in the radial direction thereof. In order to increase the number of looped seal portions, it is necessary to provide as many seal members 22 of different sizes as the number of seal portions to be increased. The seal members 22 can be provided unitarily with the metallic gasket 18 but that unitarily combining the seal members 22 with the metallic gasket 18 by using a bonding agent or heat will probably take much time since the valley portion 20 in the bead 21 in a free state in a stage in which the gasket has not yet been tightened has a considerably wide clearance.

US-3053544 discloses a gasket according to preamble of claim 1 for use between mating or sealing flanges of a pressurized system, which gasket comprises a substantially flat sheet-like body of resilient material, an aperture in said body defined by a reversely curled lip thereof having its edge portion overlying and spaced from said body, a first bead on said body surrounding said lip and extending outwardly from said body to a lesser degree than said edge portion of said lip, and a second bead on said body surrounding said first bead and extending outwardly from said body in an opposite direction from said first bead, the distance from the top of said one bead being greater than twice the thickness of said material of said sheet-like body.

A primary aim of the present invention is to solve these problems, and provide a simply constructed metallic gasket capable of correcting the imperfect alignment of the opposed surfaces to be combined, when a cylinder block and a cylinder head in an engine are tightened and fixed to each other via a single plate type elastic metallic body having beads and folded portions; practically offsetting strain, even if it should occur between adjacent cylinder bore holes due to the bend of the cylinder head, by the elastic metallic body to prevent the sealing effect thereof from decreasing, a high-temperature and high-pressure combustion gas which causes the beads to be corroded and soiled from entering the clearance between the opposed surfaces combined, and even a large fluctuating load stress which occurs in the portions of the cylinder head which have the lowest rigidity from causing permanent strain and cracks to occur in the beads; and having looped seal members formed in the portions as well of the elastic metallic body which are other than the bead-carrying portions thereof.

The present invention provides a metallic gasket comprising an elastic metallic plate formed out of an elastic metallic material and provided with flat surfaces, cylinder bore holes formed in said elastic metallic plate, beads formed on the parts of said metallic plate about the entire circumferential edge of each cylinder bore hole, said beads having ridge portions projecting from any one side of said flat surfaces, folded portions formed by bending the portions of said elastic metallic plate, which extend about the entire circumference of each cylinder bore hole onto the surface of said metallic plate on which the ridge portions of said beads extend, in such a manner that said folded portions do not overlap with said beads, said folded portions being so formed that the sum of the thickness of each folded portion and that of said elastic metallic plate is smaller than the height of each bead-carrying portion of said metallic plate so as to regulate properly a compressive force applied to said beads and prevent the full compression of said beads; characterized in that only one bead is formed about any one of said cylinder bore holes, said folded portions are formed in such a manner that the entire folded surface thereof comes into contact with the surface of said elastic metallic plate under a no-load state, in that said elastic metallic plate has been heat treated after said folded portions have been formed on said elastic metallic plate, and in that said beads have cross-sectionally arcuately projecting ridge portions at the parts thereof which are between adjacent cylinder bore holes, and cross-sectionally flat projecting ridge portions at the parts thereof which are other than said parts between adjacent cylinder bore holes.

Accordingly, when the elastic metallic body of this metallic gasket is tightened and compressed between a cylinder head and a cylinder block which constitute two structural parts having opposed surfaces to be combined, the beads are deformed due to the compressive force, and looped seal portions are formed against the opposed surfaces to be combined in the positions on the elastic metallic body which are spaced radially outward from the circumferences of the cylinder bore holes. Simultaneously, the folded portions which are substantially two times as thick as the other portion of the elastic metallic body form some other looped seal portions around the cylinder bore holes. Even when imperfect alignment occurs in the opposed surfaces to be combined of the two structural parts during the tightening of the metallic gasket, the beads and folded portions are deformed in accordance with the strain occurring at this time, to offset the irregularity of the clearance between the opposed surfaces to be combined.

Owing to the increase of the number of the seal portions and the offsetting of the imperfect alignment of the opposed surfaces to be combined, the quantity of strain occurring in the cylinder head during combustion cycles of the engine, i.e. the repetition of the suction stroke, compression stroke, expansion stroke and exhaust stroke, especially, the repetition of expansion stroke is minimized. Moreover, since the number of looped seal portions between the opposed surfaces to be combined of the above-mentioned structural members is increased, the tightening force of the structural members is supported in a divided manner, so that the total compression of the beads is prevented owing to the presence of the folded portions. This enables the fluctuating load stress, which occurs at the time of the starting, rotation and stopping of the engine, to be reduced. Accordingly, this serves to prevent the occurrence of permanent strain and cracks in the beads, and improve the durability of the beads. Since the folded portions are formed integrally with the gasket body, they are not displaced or irregularly compressed when the gasket is used by being tightened.

In one embodiment of the present invention the metallic gasket further comprises regulating plates, which consist of a metallic material, laminated on the projecting end surfaces of said beads and on the surfaces of the parts of said elastic metallic plate which extend radially outwardly of said beads.

Especially, this metallic gasket is capable of increasing the strength of the beads by the regulating plates, and the rate of offsetting the imperfect alignment of the beads, reducing the height of the beads by at least a level corresponding to the thickness of the regulating plates, so that the beads can be protected against a high surface pressure imparted thereto, and being formed to a simple structure which can prevent the beads from being totally compressed.

Namely, in this metallic gasket in which the regulating plates are provided on the elastic metallic body thereof, the sealing pressure applied to the cylinder head and cylinder block therefore increases by a level corresponding to the increased portion owing to the regulating plate of the thickness of the gasket body, whereby a difference between the thickness of the portions of the elastic metallic body which are in the regions of the folded portions and that of the portions of the elastic metallic body which are in the regions on the radially outer side of the beads can be regulated. In this metallic gasket, the height of the beads can be reduced by at least a level corresponding to the thickness of the regulating plates, and the stress occurring in the beads when the metallic gasket is tightened can therefore be further reduced. This enables the total compression of the beads to be prevented, and the durability of the beads to be improved.

When this metallic gasket is tightened and compressed between the opposed surfaces to be combined of the cylinder head and cylinder block, the beads provided on the portions of the gasket body which are close to the circumferences of the cylinder bore holes and the regulating plates laminated on the projecting surfaces of the beads are deformed by the compressive force to form looped seal portions in the positions spaced from the circumferences of the cylinder bore holes in the radially outer side thereof, with respect to the opposed surfaces to be combined. Since the thickness of the folded portions formed around the circumferences of the cylinder bore holes is about two times large as that of the elastic metallic body, some other looped seal portions are formed around the cylinder bore holes. The rigidity of the portions of the surface to be combined of the cylinder head which correspond to the portions of the elastic metallic body which are between the cylinder bore holes decreases, so that these surface portions are liable to become irregular when the cylinder head is tightened. Even if imperfect alignment occurs on the opposed surfaces to be combined of the two structural members during the tightening of the metallic gasket, the beads, regulating plates and folded portions are deformed in accordance with the strain occurring at such a time to offset the irregular clearance between these opposed contact surfaces. Moreover, since the number of looped seal portions between the opposed surfaces to be combined of the structural members is increased, the tightening force of these structural members is supported in a shared manner, so that the load on the beads decreases.

The increase of the number of the looped seal portions enables a fluctuating load, which occurs due to the repetition of the combustion cycles of the engine, to be supported in a shared manner owing to the synergistic effect of the increased seal portions and the elimination of the irregularity of the opposed surfaces to be combined, so that the quantity of strain occurring in the cylinder head is minimized. Since the bead-carrying portions of the elastic metallic gasket are doubly formed owing to the regulating plates laminated thereon, the height of the beads can be reduced by at least a level corresponding to the thickness of the regulating plates owing to the provision thereof. In addition, the total compression of the beads can be prevented by the folded portions, and the regulating plates reinforce the elastic metallic body. Accordingly, the fluctuating load stress occurring in the beads at the time of starting, rotation and stopping of the engine decreases, and the occurrence of permanent strain and cracks in the beads can be prevented.

In this metallic gasket, a difference in height corresponding to the thickness of the elastic metallic body thereof occurs between the folded portions and the regions of the radially outer side of the beads. If such a difference in height is not smaller than a required level, the deformation occurring between the cylinder head and cylinder block cannot be offset, or the thickness of the gasket has to be determined on the basis of the quantity of deformation occurring between the opposed surfaces to be combined. However, since this metallic gasket has regulating plates laminated on the elastic metallic body, the difference in height referred to above can be set to an arbitrary level, and the bearing factors of the folded portions and beads around the cylinder bore holes, and the portions of the gasket body which are around the water holes and oil holes can be regulated properly.

In this metallic gasket, the folded portions can be formed to substantially the same thickness along the whole circumference of the cylinder bore holes, or can be formed to a larger thickness at the parts thereof which are between adjacent cylinder bore holes and to smaller thickness at the parts thereof which are other than the parts thereof which are between adjacent cylinder bore holes. Therefore, when the cylinder head, which has a comparatively low rigidity as compared with the cylinder block, has a plurality of ports, the folded portions are able to effectively correct the flexural deformation of the material constituting the walls of adjacent cylinder bore holes. The extent to which the flaps of the folded portions are extended can be set arbitrarily unless these flaps do not overlap the beads on the elastic metallic body. Consequently, when the gasket is designed, the distribution of bearing factors of the beads and folded portions can be regulated.

If the thickness of the parts of the folded portions which are between adjacent cylinder bore holes is set larger than that of the parts thereof which are other than the parts thereof which are between adjacent cylinder bore holes with the cylinder head, the rigidity of which is comparatively low as compared with that of the cylinder block, having a plurality of ports, the flexural deformation of the material constituting the wall of adjacent cylinder bore holes can be corrected effectively.

The metallic gasket of the present invention may further comprise,on the same side as said projecting end surfaces of said beads, additional metallic plates laminated on the flat surfaces of said elastic metallic plate which are on the radially outer side of said beads for regulating the thickness of said elastic metallic plate. Therefore, if a difference, the level of which is not lower than a required level, in height occurs between the folded portions and the portions of the gasket body which are on the radially outer side of the beads, auxiliary metallic plates the thickness of which is smaller than that of the elastic metallic body are laminated on the portions of the elastic metallic body which are exclusive of the cylinder bore holes, and which are spaced from and on the radially outer side of the beads, in such a manner that the surfaces of these portions on which the auxiliary plates are laminated are on the same side as the projecting surfaces of the beads, whereby the difference in height mentioned above can be regulated.

In order to regulate a difference in height between the folded portions and beads when the height of the folded portions is smaller than that of the beads by a level not higher than a required level, soft members can be inserted in the portions to be folded and then the flaps of these portions folded back. The thickness of the soft members can be changed by changing the folding compressive force when the soft members are inserted in the portions to be folded, so as to change the degree of deformation of the soft members. The soft members can be formed so that the portions thereof in the parts of the folded portions which are between adjacent cylinder bore holes, and which have a large thermal load, has a larger thickness with the portions thereof in the parts of the folded portions which are other than the mentioned parts thereof having a smaller thickness, whereby the soft members can be set capable of withstanding a thermal load. In a certain case, the soft members can also be so formed that they are inserted in the parts of the folded portions which are between the cylinder bore holes, and not provided in the other parts thereof. If the difference in height referred to above is set to a proper level, the quantity of strain of the cylinder head occurring at the time of starting, rotation and stopping of the engine is minimized, and the fluctuating load stress based on the strain can also be reduced. This serves to prevent the occurrence of permanent strain and cracks in the beads, and improve the durability of the beads.

The elastic metallic body of the gasket of the present invention can also be coated at its both surfaces with a non-metallic material, such as a heat and oil resisting rubber or resin, to avoid direct metal-to-metal contact between the elastic metallic body, cylinder head and cylinder block, and enable the corrosion resistance, durability and strength of the corrosive combustion gas-exposed metallic surfaces to be secured, and the sealing function of the gasket to be fully displayed and secured with respect to the uneven processed surfaces of the cylinder head and cylinder block.

In an embodiment of the metallic gasket of the present invention the folded portions provided on the elastic metallic body are formed so that the thickness of the parts of the folded portions which are between adjacent cylinder bore holes is larger than that of the parts thereof which are other than the parts between adjacent cylinder bore holes, to enable the thicker parts of the folded portions to effectively offset the flexure which is liable to occur in the largest scale in the parts of the elastic metallic body which are between adjacent cylinder bore holes due to the bend of the cylinder head, the lowering of the sealing effect of the gasket, and the corrosion and soiling of the beads on the elastic metallic body which are ascribable to the entry of a high-temperature and high-pressure combustion gas to be prevented, the distribution of bearing factor of the elastic metallic body to be corrected properly by increased thickness of the metallic body at the folded portions thereof, the bearing factor of the folded portions and that of the beads to be balanced, and the bearing factor of the folded portions around the cylinder bore holes and those of the beads and the portions of the gasket body which are around the water holes and oil holes to be regulated properly.

An embodiment of the metallic gasket according to the present invention will now be described, by way of example only, with reference to the following drawings, in which:
Fig. 1 is a plan view of a metallic gasket;
Fig. 2 is a sectional view of the metallic gasket of Fig. 1, taken along the line II-II therein;
Fig. 3 is a sectional view of the metallic gasket of Fig. 1, taken along the line III-III therein;
Fig. 4 is a sectional view, which corresponds to the sectional view taken along the line II-II in Fig. 1, of another metallic gasket;
Fig. 5 is a sectional view, which corresponds to the sectional view taken along the line III-III in Fig. 1, of the gasket of Fig. 4;
Fig. 6 is a sectional view, which corresponds to the sectional view taken along the line II-II in Fig. 1, of still another metallic gasket;
Fig. 7 is a sectional view, which corresponds to the sectional view taken along the line III-III in Fig. 1, of the of the gasket of Fig. 6;
Fig. 8 illustrates the distribution of thickness of a folded portion formed around a cylinder bore hole;
Fig. 9 illustrates the distribution of thickness of a folded portion formed around a cylinder bore hole;
Fig. 10 is a plan view of a further metallic gasket;
Fig. 11 is an enlarged plan view showing the detail of a part of the metallic gasket of Fig. 10;
Fig. 12 is a sectional view taken along the line IV-IV in Fig. 11;
Fig. 13 is a sectional view taken along the line V-V in Fig. 11;
Fig. 14 is a sectional view taken along the line VI-VI in Fig. 11;
Fig. 15 is a sectional view, which corresponds to a sectional view taken along the line IV-IV in Fig. 11, of another metallic gasket;
Fig. 16 is a sectional view, which corresponds to a sectional view taken along the line V-V in Fig. 11, of the metallic gasket of Fig. 15;
Fig. 17 is a sectional view, which corresponds to a sectional view taken along the line V-V in Fig. 11, of an embodiment of the metallic gasket according to the present invention;
Fig. 18 is a plan view of an example of a conventional metallic gasket of this kind; and
Fig. 19 is a sectional view taken along the line VII-VII in Fig. 18.

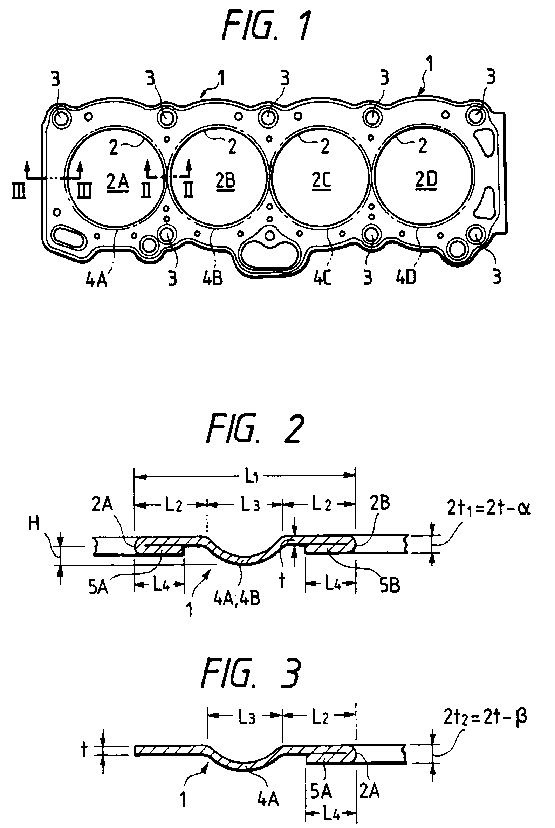

The metallic gaskets illustrated in Figures 1 to 16 are not in accordance with the claimed invention and are included for illustrative purposes only. It will be understood that features of the gaskets described in relation to those Figures can be employed in the gasket of the claimed invention.

A metallic gasket shown in Fig. 1 is adapted to seal a clearance between the opposed surfaces to be combined of structural members, and used to seal, for example, the opposed surfaces to be combined of a cylinder head and a cylinder block (neither of which are shown in the drawing) of a four-cylinder engine. The gaskets which will be described hereunder are not limitedly applied to a four-cylinder engine but they can, of course, be applied to, for example, a straight-type six-cylinder engine or a V-type six-cylinder engine.

This metallic gasket is produced out of a single elastic metallic plate 1 consisting, for example, of a material to be precipitation hardened, such as SUS630 and SUS631, a material to be nitrided, such as SUS304, SUS301 or a SK material (SK1-SK7), a material to be hardened and tempered, such as SUS420J₂ and SUS440A, or a material to be solid solution heat treated, such as a metal material including titanium alloy and aluminum alloy, any one of these materials being formed to a thickness t of, for example, 0.2 mm - 0.3 mm, the hardness of the material before subjected to the formation of beads being, for example, not higher than Hv 200.

Specific examples of hardness of these materials which have been heat treated are as follows. When SUS304, SUS301 or SK materials (SK1-SK7) were nitrided, the hardness of SUS304 and SUS301 was not higher than Hv 200 (surfaces only) before they were heat treated, and not lower than Hv 500 after heat treated, and the hardness of SX materials (SK1-SK7) was not higher than Hv 200 before they were heat treated, and not lower than Hv 500 after heat treated. When SUS630 and SUS631 were precipitation hardened, the hardness thereof was not higher than Hv 200 before they were heat treated, and not lower than Hv 350 after heat treated. When SUS420J₂ and SUS440A were hardened and tempered, the hardness thereof was not higher than Hv 200 before they were heat treated, and not lower than Hv 350 after heat treated. When titanium alloy and aluminum alloy (6A1-2Sn-4Zr-6Mo) were solid-solution heat treated, the hardness thereof was not higher than Hv 200 before they were heat treated, and not lower than Hv 350 after heat treated.

The elastic metallic plate 1 of this metallic gasket is provided with four holes corresponding to four cylinders, i.e. cylinder bores formed in a cylinder block, which holes are cylinder bore holes 2A, 2B, 2C, 2D (when these cylinder bore holes are generally referred to, they are designated by a reference numeral 2). The elastic metallic plate 1 constituting the metallic gasket is also provided with a plurality of water holes through which cooling water is passed, oil holes and oil return holes through which an oil is passed, knock holes and rivet holes. Since these holes are associated with the techniques known in the technical field of metallic gaskets, the descriptions thereof are omitted in this specification.

If the upper and lower surfaces of the metallic gasket are coated with a non-metallic material, such as heat and oil resisting rubber (for example, fluororubber) or a resin, to a thickness of, for example around 10 µ - 50 µ (not shown), the metal-to-metal contact of the gasket with the cylinder head and cylinder block can be avoided, and the corrosion resistance, durability and strength of the metallic gasket can be secured. Even when the mechanically processed surfaces of the metallic gasket are uneven, a film of such a non-metallic material covers the uneven surfaces to form excellent surfaces, and this enables the sealing function of the metallic gasket to be satisfactorily displayed.

Fig. 2 is a sectional view of a boundary portion between adjacent cylinder bore holes 2A, 2B in the elastic metallic plate 1 taken along a line connecting the centers of these holes 2A, 2B, i.e. a sectional view of the portion of the elastic metallic plate 1 which is between cylinder bore holes 2. The boundary portions between the other adjacent cylinder bore holes are also formed to have identical cross section as a matter of course.

Fig. 3 is a sectional view of the metallic gasket taken along the line connecting the cylinder bore hole 2A and an end portion, i.e. an edge portion of the elastic metallic plate 1. The portion of the metallic plate 1 which is between the cylinder bore hole 2D on the opposite side of the hole 2A and the relative edge portion of the metallic plate 1 is also formed to have an identical cross section. Not only these portions but also the portions of the elastic metallic plate which are around the cylinder bore holes 2 except the regions thereof between the same holes 2 are also formed to have an identical cross section as a matter of course.

As may be understood from these drawings, the portions of the elastic metallic plate 1 constituting the metallic gasket which are close to and around the cylinder bores 2 are provided with cross-sectionally cone-shaped beads 4 which are formed concentrically with and which annularly surround the cylinder bore holes 2 (when the beads are generally referred to, they are designated by a reference numeral 4). When the thickness t of the elastic metallic plate 1 in the illustrated example is, for example, 0.2 mm, each bead 4 starts in a position which is a predetermined distance L₂ away from the inner circumferential edge of a cylinder bore hole 2, for example about 2.9 mm, and extends in a radial direction so that the bead 4 has a predetermined width L₃ of about 2 mm, the height H of the bead 4 being 0.2 - 0.25 mm. A distance L₁ between adjacent cylinder bore holes 2 is, for example, about 7.8 mm. A bead 4A around the cylinder bore hole 2A and a bead 4B around the cylinder bore hole 2B are piled up at the adjoining portions thereof to be formed into one bead 4. These portions of adjacent beads 4 may be formed so as to be spaced from each other by a very short distance without lying one upon the other.

Around a cylinder bore hole 2 formed in the elastic metallic plate 1, folded portions 5A, 5B are formed so that the folded portions do not lie on the radially inner parts of the bead 4 (when the folded portions are generally referred to, they are designated by a reference numeral 5). The width L₄ of each folded portion is, for example, about 2.5 mm.

The above-described metallic gasket can be manufactured through the following steps.

First, various kinds of holes including cylinder bore holes are formed in a metallic plate of a predetermined thickness t. Beads 4 are then molded at the portions of the metallic plate which are spaced radially outward from and extend along the circumferences of the cylinder bore holes 2. The portions of the metallic plate which are around adjacent cylinder bore holes 2 are folded in the radially outward direction with respect to the holes 2 to form folded portions 5. The thickness of the folded portions 5 thus formed is 2t. In order to regulate the thickness of the folded portions 5 formed on the metallic plate, a predetermined level of compressive force is applied to the folded portions 5 to mold the same to a predetermined thickness 2t₁ (=2t-α). Finally, the metallic plate on which the folded portions 5 have been formed is heat treated so as to regulate the hardness of the metallic plate, whereby an elastic metallic plate 1 is obtained. The elastic metallic plate 1 constituting a folded portion-carrying metallic gasket is heat treated in this final step so that the hardness thereof becomes, for example, not lower than Hv 350.

The rigidity of a cylinder head is low as compared with that of a cylinder block. In a multicylinder engine, the portions of a metallic gasket which are between adjacent cylinder bore holes 2 are liable to be strained most largely due to fluctuations in load in the explosion and expansion strokes in the combustion cycle of the engine. Therefore, the sealing function of the metallic gasket tends to deteriorate most significantly at these portions. Accordingly, the folded portion 5 is formed so that the thickness 2t₁ (=2t-α) of the parts thereof shown in Fig. 2 which are between adjacent cylinder bore holes 2 becomes larger than that 2t₂ (=2t-α wherein α<β) of the parts thereof which are other than the parts between adjacent cylinder bore holes 2.

When the metallic plate is subjected to bending so as to form a folded portion 5 as shown in Fig. 3 on the part of the metallic plate which is other than the parts thereof between adjacent cylinder bore holes, the precompression (compression carried out in advance of the compression for combining the opposed surfaces of the cylinder head and cylinder body) of the part is carried out so that, if the thickness of the metallic plate is set to t, the thickness 2t₁ of the part between adjacent cylinder bore holes 2 becomes smaller than that 2t of a folded portion of the metallic plate by α, and the thickness 2t₂ of the parts which are other than the parts between adjacent cylinder bore holes 2 is smaller than that 2t of a folded portion by β.

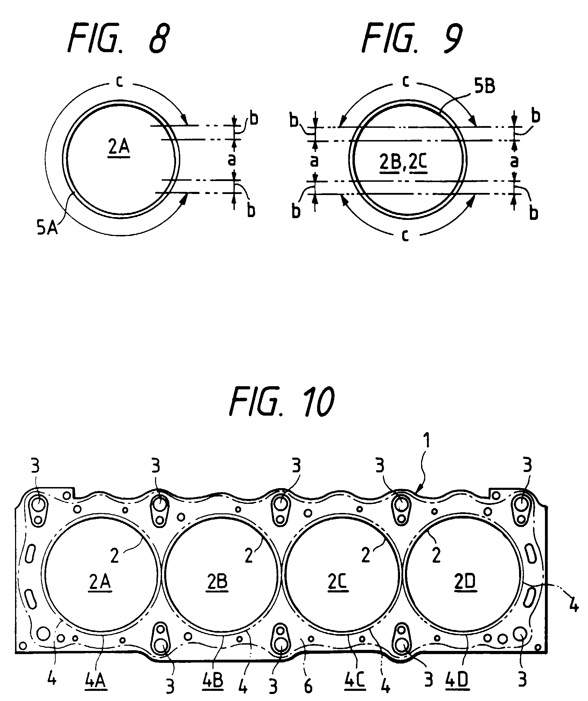

Concretely speaking, as shown in Figs. 8 and 9, the thickness 2t₁ of the part of a folded portion which is between adjacent cylinder bore holes in a region a between the same holes is set to, for example, 0.15 mm, and this thickness gradually decreases in the regions b extending on both sides of the region a, the thickness 2t₂ of the parts of the folded portion which are in the area other than the area between adjacent bores 2 in the regions c extending arcuately on both sides of the regions b being set to, for example, 0.12 mm.

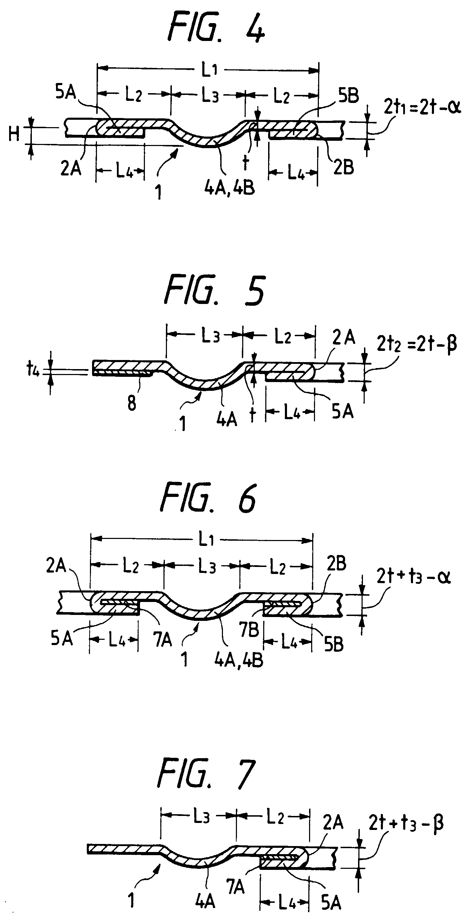

Another metallic gasket will now be described with reference to Figs. 4 and 5. Since a plan view, the positions in which the cross-sectional views are taken and the construction of main parts of this gasket are identical with those of the previously-described embodiment, the parts of this metallic gasket which are identical with those of the previously-described gasket are designated by the same reference numerals, and the duplication of a description thereof is omitted.

In this gasket, the parts of the folded portions which are between adjacent cvlinder bore holes 2 are precompressed with respect to the plate body of the metallic gasket, so that the thickness of the plate decreases (2t₁ = 2t-α) by α, and the thickness of the parts thereof which are around the cylinder bore holes 2) but not between the same holes 2 decreases (2t₂ = 2t-β) by β which is larger than α. The values of both α and β can be changed in accordance with the position around the cylinder bore hole 2 as shown in Figs. 8 and 9.

In the portions of the metallic plate which are around the cylinder bore holes 2 but not between the cylinder bore holes 2, auxiliary metallic plates 8 having a thickness t₄, which is smaller than that t of the elastic metallic plate 1, are attached to the surfaces, which are on the same side as those of the top ends of the projecting portions of the beads 4, of the parts on the radially outer side of the beads 4. The auxiliary metallic plates 8 are provided for the purpose of regulating the difference in thickness between the portions of the metallic plate which are around the cylinder bore holes 2 and those thereof which are on the radially outer side of the beads 4. For example, when thickness of the folded portions 5 around the cylinder bore holes 2 does not vary largely even by a precompression operation, the auxiliary metallic plates 8 are provided on the flat portions of the surface on the same side as the top ends of the projecting portions of the beads 4 so as to reduce the difference in height between the folded portions 5 and the parts of the metallic plate which are on the radially outer side of the beads 4.

Still another metallic gasket will now be described with reference to Figs. 6 and 7. Since a plan view, the positions in which the cross-sectional views are taken and the construction of main parts of this gasket are identical with those of the previously-described gaskets, identical parts are designated by the same reference numerals, and the duplication of a description thereof is omitted.

In this gasket soft metallic plates 7A, 7B (when they are generally referred to, they will be designated by a reference numeral 7) of a thickness t₃ of, for example, 100-200 µ are held in folded portions 5. Therefore, the thickness of the folded portions 5 on an elastic metallic plate 1 which has been precompressed is 2t + t₃ - α at the parts thereof which are between cylinder bore holes 2, and 2t + t₃ - β at the parts thereof which are around the cylinder bore holes but not between the cylinder bore holes 2. Since β has a value larger than that of α, the thickness (2t + t₃ - α) of the parts of the folded portions which are between the cylinder bore holes 2 is larger than that (2t + t₃ - β) of the parts thereof which are around the cylinder bore holes 2 but not between the cylinder bore holes 2. The values of both α and β can, of course, be changed in accordance with the positions of parts of the folded portions around the cylinder bore holes 2 as shown in Figs. 8 and 9.

This metallic gasket can be manufactured through the following steps. This method of manufacturing metallic gaskets is identical with the metallic gasket manufacturing method of the previously-described gaskets except that the previously described method further includes a step of inserting soft metallic plates 7 in the folded portions 5. Therefore, only that additional step will be described. A step of inserting soft metallic plates 7 in the folded portions 5 is added to a step of bending the portions of a metallic plate which are around the cylinder bore holes 2 in the radially outward direction so as to form folded portions 5. A compressive force is then applied to the folded portions 5 in which the soft metallic plates 7 have been held so as to mold the folded portions to a preset thickness. Finally, the metallic plate on which the folded portions have been formed and the soft metallic plates 7 inserted in the folded portions are heat treated to regulate the hardness thereof.

The soft metallic plates 7 are provided for the purpose of regulating a difference in thickness between the parts of the folded portions around the cylinder bore holes 2 and the parts thereof which are on the radially outer side of the beads 4.
For example, when the thickness of the folded portions decreases largely at the parts thereof which are around the cylinder bore holes 2 due to the precompression of the folded portions, these soft metallic paltes 7 are provided on the surfaces of the folded portions which are on the same side of the projecting end surfaces of the beads 4 so as to increase the difference in height between the folded portions 5 and the portions of the metallic plate which are on the radially outer side of the beads 4.

The metallic gasket is inserted between the cylinder head and cylinder block. When it is tightened with, for example, bolts inserted into bolt holes 3, to be pressed, the beads 4 provided around the positions close to the cylinder bore holes 2 in the elastic metallic plate 1 form looped seal portions linearly contacting (before a load is applied) or a narrow surface contacting (after a load is applied) the joint surface of the cylinder head. The sealing pressure of the folded portions 5, which form looped seal portions with respect to the opposed surfaces to be combined of the cylinder block and cylinder head, against these cylinder head and cylinder block increases by a level corresponding to the increase in the thickness of the plate, and these two-step looped seal portions prevent the high-temperature and high-pressure combustion gas from flowing along the circumferences of the cylinder bore holes 2 and leaking from the opposed joint surfaces of the cylinder head and cylinder block.

Even when imperfect alignment occurs between the opposed surfaces to be combined of the cylinder head and cylinder block during the tightening of the cylinder head and cylinder block, the folded portions 5 are deformed correspondingly to eliminate an irregular clearance between these opposed surfaces. Owing to offsetting of the increase in the number of looped seal portions and the imperfect alignment of the opposed surfaces to be combined, the quantity of flexure of the cylinder head, which occurs due to the repetition of explosion stroke (expansion stroke) of the engine during a combustion cycle, is minimized. Since the folded portions 5 in addition to the beads 4 also contact the opposed joint surfaces to support the tightening force in a shared manner, so that the total compression on the beads 4 is alleviated by as much as a portion shared by the folded portions 5, whereby a load stress occurring in the beads 4 is reduced.

A further metallic gasket will now be described with reference to Figs. 10, 11, 12, 13 and 14. Since the construction of this gasket is substantially identical with that of the metallic gasket shown in Fig. 1 except that regulating plates 6 consisting of metallic plates are laminated on the elastic metallic plate 1, unnecessary duplication of description will be omitted by designating the same parts by the same reference numerals.

In this gasket the thickness 2t₁ of the part of a folded portion which is between adjacent cylinder bore holes in a region a between the same holes is set to 0.37 mm, and this thickness decreases gradually in the regions b extending on both sides of the region a, the thickness 2t₂ of the parts of the folded portion which are in the regions c extending arcuately on both sides of the regions b being set to, for example, 0.32 mm, as shown in Figs. 8 and 9. The elastic metallic plate 1 on which the folded portions 5 have been formed is heat treated to regulate the hardness thereof. During this time, the hardening of the metallic plate is done so that the hardness thereof which is not higher than Hv 200 prior to the formation of the beads 4 attains a level, which corresponds to the kind of the material of the elastic metallic plate 1, after a heat treatment has been finished.

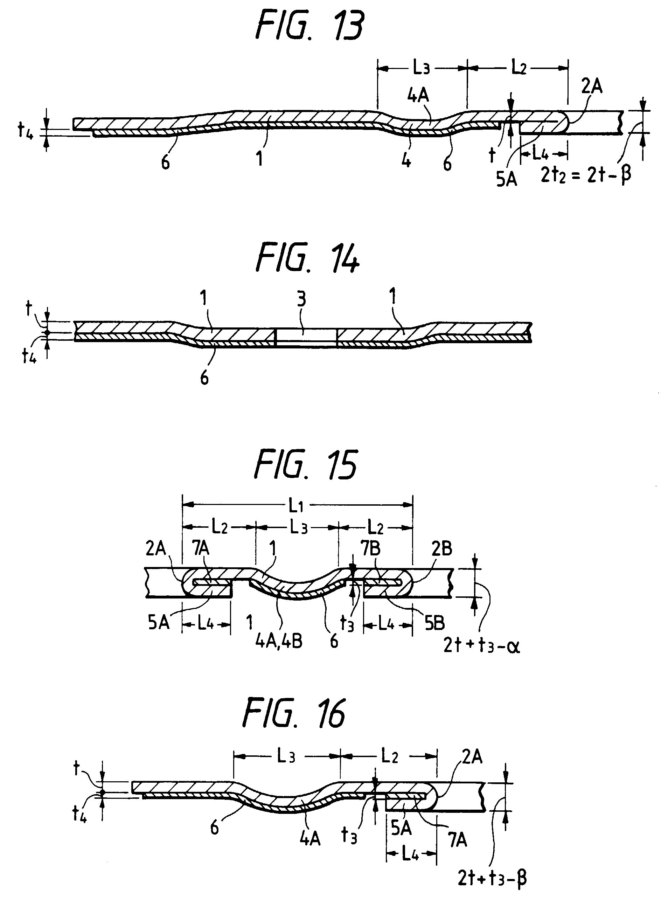

This gasket is characterized in that regulating plates 6 consisting of metallic plates are laminated on the beads 4 on the elastic metallic plate 1 so as to reinforce the metallic plate and also increase the strength of the beads 4. Namely, the plate thickness regulating plates 6 are laminated on the surfaces, which are on the same side of the projecting end surfaces of the beads 4, of the portions of the metallic plate which correspond to the beads 4 around the cylinder bore holes 2 and the portions farther away therefrom, i.e. the surfaces of the portions of the metallic plate which correspond to the radially outer side of the holes 2 inclusive of the beads 4. In the region between the cylinder bore holes 2, the part thereof which is farther away from the bead 4 with respect to both the cylinder bore holes 2A, 2B is the bead 4 itself. Namely, the regulating plates 6 are laminated on the beads 4 only. The regulating plates 6 are formed out of a hard material (Hv 350-500), such as SUS301 or SUS304, and have a thickness t₄ (for example, 0.10-0.200 mm) which is smaller than that t (for example, 0.2-0.3 mm) of the metallic gasket. The regulating plates 6 are provided mainly for the purpose of regulating a difference between the thickness of the parts of the elastic metallic plate 1 constituting the metallic gasket which are around the cylinder bore holes 2, i.e the folded portions 5 and that of the parts of the metallic plate 1 which are on the radially outer side of the beads 4. For example, when the thickness of the folded portions around the cylinder bore holes 2 does not change largely even by the precompression of the elastic metallic plate, the regulating plates 6 are laminated on the projecting end surfaces of the beads 4 so as to minimize the difference in height between the folded portions 5 and the parts of the metallic plate which are farther away from or on the radially outer side of the beads 4. Since the regulating plates 6 consist of the above-mentioned hard material, the strength of the laminated portions including the beads 4 can be increased, and the regulating plates 6 can be provided with the function of protecting the metallic plate against the surface pressure occurring when the beads 4 contact the opposed surfaces to be combined of the cylinder head and cylinder block. As shown in Fig. 14, which cross-sectionally shows the portion of the metallic gasket which is provided with a water hole 3, the metallic gasket is deformed so that the portion thereof which is around the hole 3 is recessed slightly (or in the shape of a mountain) from the other planar portion and concentrically with the hole 3, and such a recessed portion enables a sealing effect to be obtained around the hole 3 when the metallic gasket is tightened.

When the metallic gasket is inserted between the cylinder head and cylinder block, and tightened and pressed with, for example, bolts inserted in bolt holes 3, the beads 4 provided on the portions of the elastic metallic plate 1 which are close to and around the cylinder bore holes 2 contact the joint surface of the cylinder head to form looped seal portions. The folded portions 5 form looped seals at the inner side of the looped seal portions based on the beads 4, with respect to the opposed surfaces to be combined of the cylinder block and cylinder head, and the sealing pressure applied to the cylinder head and cylinder block becomes hgiher by a level corresponding to an increase in the thickness of the metallic gasket. Owing to such two-step looped seal portions, the leakage of a high-temperature and high-pressure combustion gas from the cylinder bore holes 2 to the opposed joint surfaces of the cylinder head and cylinder block can be prevented.

Even if imperfect alignment occurs between the opposed surfaces to be combined of the cylinder head and cylinder block when the cylinder head and cylinder block are tightened, the folded portions 5 and the beads 4 on which the regulating plates 6 consisting of metallic plates are laminated are deformed accordingly to offset the increase in the number of the looped seal portions and irregular clearance between the opposed joint surfaces as mentioned above. Owing to the offsetting of the increase in the number of looped seal portions and the imperfect alignment of the opposed surfaces to be combined, the quantity of flexure of the cylinder head, which occurs due to the repetition of expansion stroke (expansion stroke) of the engine during a combustion cycle, is minimized. Since the folded portions 5 in addition to the beads 4 also contact the opposed joint surfaces, the tightening force is supported in a joint manner on the beads 4 and folded portions 5. Furthermore, since the beads 4 have regulating plates 6 laminated thereon, the height of the beads 4 can be reduced by a level corresponding to the thickness of the regulating plates 6. Accoridngly, the stress occurring in the beads 4 during a tightening operation is further reduced, and the total compression is prevented.
Even if the minimized repeated stress mentioned above is imparted to the metallic gasket due to the fluctuation of load during the operation of the engine, the occurrence of permanent strain and cranks in the beads 4 can be prevented since the load stress occurring in the beads 4 is reduced.

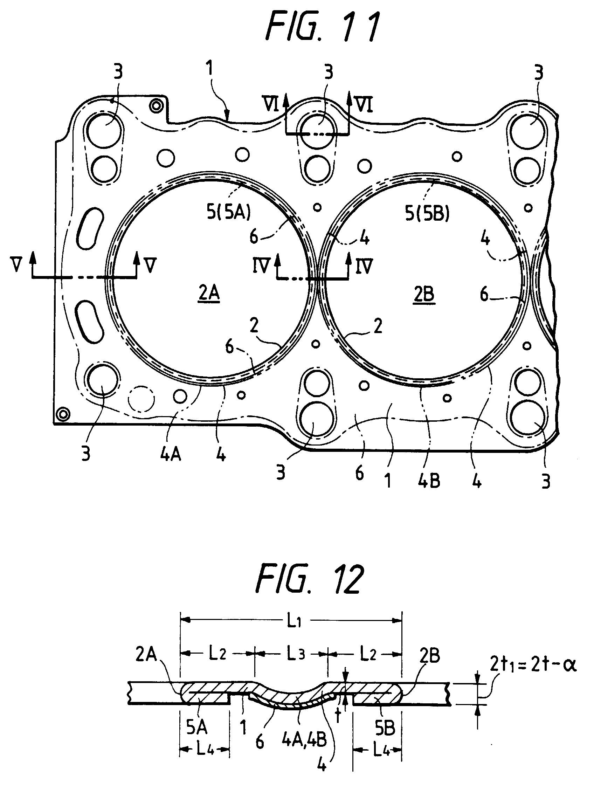

Another metallic gasket will now be described with reference to Figs. 15 and 16. Since a plan view, the position in which the cross-sectional views are taken, and the construction of this metallic gasket are identical with those of the gasket previously-described in relation to Figs. 12 and 14, the duplication of a description thereof will be omitted. In this gasket, soft metallic plates 7A,7B (when they are generally referred to, they will be designated by a reference numeral 7) of a thickness t₃ of (for example, 100 µ - 200 µ) are held in folded portions 5. Therefore, the thickness of the folded portions 5 on an elastic metallic plate which has been precompressed is 2t + t₃ - α at the parts thereof which are between cylinder bore holes 2, and 2t + t₃ - β at the parts thereof which are around the cylinder bore holes but not between the cylinder bore holes 2. Since β has a value larger than that of α, the thickness (2t + t₃ - α) of the parts of the folded portions which are between the cylinder bore holes 2 becomes larger than that (2t + t₃ - β) of the parts thereof which are around the cylinder bore holes 2 but not between the cylinder bore holes 2.

An embodiment of the metallic gasket according to the present invention will now be described with reference to Fig. 17. In the metallic gasket in this embodiment, soft metallic plates 7A, 7B constituting soft members are held in the folded portions 5 between cylinder bore holes 2 as shown in Fig. 15 but such soft metallic plates are not in the folded portions 5A which are other than the folded portions on the regions of the metallic gasket which are positioned between cylinder bore holes 2.

In the metallic gasket in this embodiment, it is considered that the soft metallic plate 7 can be modified variously. Namely, the values of a and β can be changed in accordance with the position of the portion of the metallic gasket which is around a cylinder bore hole as shown in Figs. 8 and 9. For example, the soft metallic plates 7 may be provided on the whole circumferential areas of the folded portions 5, or formed so that the thickness of the soft metallic plates 7 is larger at only the parts thereof that are between adjacent cylinder bore holes 2, and smaller at the parts thereof which are other than the parts between adjacent cylinder bore holes 2, or provided on only the parts thereof which are between adjacent cylinder bore holes 2. In the case of the metallic gasket in this embodiment, the soft metallic plates 7 are inserted in the folded portions 5 in the step of forming the folded portions 5, after the regulating plates 6 have been laminated on the elastic metallic plate 1. A compressive force is then applied to the folded portions 5 so as to mold the same to a preset thickness. Finally, the elastic metallic plate 1 on which the folded portions 5 have been formed and the soft metallic plates 7 held in the folded portions 5 are heat treated to regulate the hardness thereof.

The soft metallic plates 7 are provided for the purpose of regulating a difference in thickness between the parts of the folded portions around the cylinder bore holes 2 and the parts thereof which are on the radially outer side of the beads 4. For example, when the thickness of the folded portions decreases largely at the parts thereof which are around the cylinder bore holes 2 due to the precompression of the folded portions, these soft metallic plates 7 are laminated on the surfaces of the folded portions which are on the same side of the projecting end surfaces of the beads 4, and held in the folded portions 5, whereby a difference in height between the folded portions 5 and the portions of the metallic plate which are on the radially outer side of the beads 4 is increased.

This embodiment is identical to the gasket shown in Figures 4 and 5 except that it includes an example of beads 4, in which the shape of the portions of the beads 4 which are around the cylinder bore holes 2 but not between adjacent cylinder bore holes is modified. The portions of the beads 4 which are in such areas, and which have a radial width of d, are flattened at the projecting top parts thereof, and the spring constant cf these portions is set smaller correspondingly. Since the shape of the portions of the heads 4 which are between adjacent cylinder bore holes 2 is identical with that of the corresponding portions in that gasket previously-described in relation to Figures 4 and 5, unnecessary duplication of description will be omitted.

## Claims

1. A metallic gasket comprising an elastic metallic plate (1) formed out of an elastic metallic material and provided with flat surfaces, cylinder bore holes (2) formed in said elastic metallic plate (1), beads (4) formed on the parts of said metallic plate (1) about the entire circumferential edge of each cylinder bore hole (2), said beads (4) having ridge portions projecting from any one side of said flat surfaces, folded portions (5) formed by bending the portions of said elastic metallic plate (1), which extend about the entire circumference of each cylinder bore hole (2) onto the surface of said metallic plate (1) on which the ridge portions of said beads (4) extend, in such a manner that said folded portions (5) do not overlap with said beads (4), said folded portions (5) being so formed that the sum of the thickness of each folded portion (5) and that of said elastic metallic plate (1) is smaller than the height of each,bead-carrying portion of said metallic plate (1) so as to regulate properly a compressive force applied to said beads (4) and prevent the full compression of said beads (4); characterized in that only one bead (4) is formed about any one of said cylinder bore holes (2), said folded portions (5) are formed in such a manner that the entire folded surface thereof comes into contact with the surface of said elastic metallic plate (1) under a no-load state, in that said elastic metallic plate (1) has been heat treated after said folded portions (5) have been formed on said elastic metallic plate (1), and in that said beads (4) have cross-sectionally arcuately projecting ridge portions at the parts thereof which are between adjacent cylinder bore holes (2), and cross-sectionally flat projecting ridge portions at the parts thereof which are other than said parts between adjacent cylinder bore holes (2).

2. A metallic gasket according to Claim 1, wherein said folded portions (5) are formed to substantially the same thickness about the entire circumference of each cylinder bore hole (2).

3. A metallic gasket according to Claim 1, wherein said folded portions (5) are formed to a larger thickness at the parts thereof which are between said cylinder bore holes (2), and to a smaller thickness at the other parts thereof.

4. A metallic gasket according to any foregoing claim, wherein both surfaces of said elastic metallic plate (1) are coated with a non-metallic material, such as a heat and oil resisting rubber or a heat and oil resisting resin.

5. A metallic gasket according to any foregoing claim, further comprising, on the same side as said projecting end surfaces of said beads (4), additional metallic plates (8) laminated on the flat surfaces of said elastic metallic plate (1) which are on the radially outer side of said beads (4) for regulating the thickness of said elastic metallic plate (1).

6. A metallic gasket according to any foregoing claim, further comprising soft members (7) provided in said folded portions (5) of said elastic metallic plate (1).

7. A metallic gasket according to Claim 6, wherein said soft members (7) are provided about the entire circumference of each cylinder bore hole (2) and have a uniform thickness.

8. A metallic gasket according to Claim 6, wherein said soft members (7) are provided in the parts of said folded portions (5) which are between adjacent cylinder bore holes (2), with no soft members being provided in the other parts thereof.

9. A metallic gasket according to Claim 6, wherein the thickness of said soft members (7) provided in said folded portions (5) is greater at the parts thereof which are between adjacent cylinder bore holes (2) than at the other parts thereof.

10. A metallic gasket according to any one of claims 6 to 9, wherein said soft members (7) are formed out of any one of the materials including a graphite sheet, an aramid beater sheet, a resin and a rubber.

11. A metallic gasket according to any foregoing claim, further comprising regulating plates (6), which consist of a metallic material, laminated on the projecting end surfaces of said beads (4) and on the surfaces of the parts of said elastic metallic plate (1) which extend radially outwardly of said beads (4).

## Patentansprüche

1. Metallische Dichtung mit einer elastischen Metallplatte (1) aus einem elastischen metallischen Material, die mit ebenen Oberflächen, in der elastischen Metallplatte (1) ausgebildeten Zylinderbohrungsöffnungen (2) sowie Wülsten (4) versehen ist, die an denjenigen Teilen der Metallplatte (1) ausgebildet sind, die um den gesamten Umfangsrand jeder Zylinderbohrungsöffnung (2) angeordnet sind, wobei die Wülste (4) Rippenteile bilden, die aus einer der Seiten der ebenen Oberflächen vorstehen, sowie gefalzte Teile (5), die durch Umbiegen derjenigen Teile der elastischen Metallplatte (1), die den ganzen Umfang jeder Zylinderbohrungsöffnung (2) umgeben, auf die Oberfläche der Metallplatte (1) gebildet sind, auf der sich die Rippenteile der Wülste (4) erstrecken, derart, daß die gefalzten Teile (5) sich nicht mit den Wülsten (4) überlappen, wobei die gefalzten Teile (5) so geformt sind, daß die Summe der Dicke jedes gefalzten Teiles (5) und derjenigen der elastischen Metallplatte (1) kleiner ist als die Höhe jedes wulsttragenden Teiles der Metallplatte (1), um eine auf die Wülste (4) ausgeübte Kompressionskraft genau einzustellen und das volle Zusammendrücken der Wülste (4) zu verhindern, dadurch gekennzeichnet, daß nur ein Wulst (4) um jede der Zylinderbohrungsöffnungen (2) ausgebildet ist, die gefalzten Teile (5) derart geformt sind, daß ihre ganze gefalzte Oberfläche in Berührung mit der Oberfläche der elastischen Metallplatte (1) im nicht belasteten Zustand kommt, daß die elastische Metallplatte (1) nach dem Ausbilden der gefalzten Teile (5) auf der elastischen Metallplatte (1) wärmebehandelt wurde, und daß die Wülste (4) im Querschnitt bogenförmig vorstehende Rippenteile an denjenigen ihrer Abschnitte aufweisen, die zwischen benachbarten Zylinderbohrungsöffnungen (2) liegen, sowie im Querschnitt flach vorstehende Rippenteile an denjenigen ihrer Abschnitte, die nicht die zwischen benachbarten Zylinderbohrungsöffnungen (2) angeordnete Abschnitte sind.

2. Metallische Dichtung nach Anspruch 1, bei der die gefalzten Teile (5) mit im wesentlichen der gleichen Dicke um den ganzen Umfang jeder Zylinderbohrungsöffnung (2) ausgebildet sind.

3. Metallische Dichtung nach Anspruch 1, bei der die gefalzten Teile (5) mit einer größeren Dicke in denjenigen Abschnitten derselben ausgebildet sind, die zwischen den Zylinderbohrungsöffnungen (2) liegen, und mit einer geringeren Dicke in den übrigen Abschnitten derselben.

4. Metallische Dichtung nach einem der vorangehenden Ansprüche, bei der beide Oberflächen der elastischen Metallplatte (1) mit einem nichtmetallischen Material, wie hitze- und ölbeständigem Gummi oder einem hitze- und ölbeständigen Harz, beschichtet sind.

5. Metallische Dichtung nach einem der vorangehenden Ansprüche, bei der auf der gleichen Seite wie die vorstehenden Endflächen der Wülste (4) zusätzliche Metallplatten (8) auf die ebenen Oberflächen der elastischen Metallplatte (1) aufgeschichtet sind, die auf der radialen Außenseite der Wülste (4) zur Regulierung der Dicke der elastischen Metallplatte (1) vorgesehen sind.

6. Metallische Dichtung nach einem der vorangehenden Ansprüche, mit weichen Organen (7), die in den gefalzten Teilen (5) der elastischen Metallplatte (1) vorgesehen sind.

7. Metallische Dichtung nach Anspruch 6, bei der die weichen Organe (7) um den gesamten Umfang jeder Zylinderbohrungsöffnung (2) vorgesehen sind und gleichförmige Dicke besitzen.

8. Metallische Dichtung nach Anspruch 6, bei der die weichen Organe (7) in denjenigen Abschnitten der gefalzten Teile (5) vorgesehen sind, die zwischen benachbarten Zyliderbohrungsöffnungen (2) liegen, wobei in den anderen Abschnitten derselben keine weichen Organe vorgesehen sind.

9. Metallische Dichtung nach Anspruch 6, bei der die Dicke der weichen Organe (7), die in den gefalzten Teilen (5) vorgesehen sind, in den zwischen benachbarten Zylinderbohrungsöffnungen (2) gelegenen Abschnitten größer ist als in den übrigen Abschnitten derselben.

10. Metallische Dichtung nach einem der Ansprüche 6 bis 9, bei der die weichen Organe (7) aus einem der Materialien gebildet sind, welche eine Graphitschicht, eine Aramid-Schlagschicht, ein Harz sowie eine Gummiart umfassen.

11. Metallische Dichtung nach einem der vorangehenden Ansprüche, mit Regulierplatten (6), die aus einem metallischen Material bestehen, das auf die vorstehenden Endflächen der Wülste (4) und auf die Oberflächen derjenigen Abschnitte der elastischen Metallplatte (1) aufgeschichtet ist, welche sich von den Wülsten (4) radial nach außen erstrecken.

## Revendications

1. Joint métallique comprenant une plaque métallique élastique (1) faite d'un matériau métallique élastique et dotée de surfaces plates, des alésages de cylindre (2) formés dans ladite plaque métallique élastique (1), des nervures (4) formées sur les portions de ladite plaque métallique (1) sur la totalité du bord circonférentiel de chaque alésage de cylindre (2), lesdites nervures (4) comportant des portions de crêtes en projection depuis un côté desdites surfaces plates, des portions repliées (5) formées en repliant les portions de ladite plaque métallique élastique (1), qui s'étendent sur toute la circonférence de chaque alésage de cylindre (2) sur la surface de ladite plaque métallique (1) sur laquelle les portions de crêtes desdites nervures (4) s'étendent, de manière que lesdites portions repliées (5) ne recouvrent pas lesdites nervures (4), lesdites portions repliées (5) étant formées de sorte que la somme de l'épaisseur de chaque portion repliée et de l'épaisseur de ladite plaque métallique élastique (1) soit inférieure à la hauteur de chaque portion portant nervure de ladite plaque métallique (1) afin de réguler correctement une force de compression appliquée sur lesdites nervures (4) et d'empêcher la pleine compression desdites nervures (4); caractérisé en ce que seulement une nervure (4) est formée sur l'un quelconque desdits alésages de cylindre (2), lesdites portions repliées (5) sont formées de manière que la totalité de leur surface repliée vienne en contact avec la surface de ladite plaque métallique élastique (1) dans un état non chargé, en ce que ladite plaque métallique élastique (1) a été traitée thermiquement une fois que lesdites portions repliées (5) ont été formées sur ladite plaque métallique élastique (1), et en ce que lesdites nervures (4) comportent des portions de crêtes en projection arquées en section transversale en leurs parties qui se situent entre les alésages de cylindre (2) adjacents, et des portions de crêtes en projection plates en section transversale en leurs parties qui sont autres que lesdites parties entre les alésages de cylindre (2) adjacents.

2. Joint métallique selon la revendication 1, dans lequel lesdites portions repliées (5) sont formées de manière à avoir sensiblement la même épaisseur sur toute la circonférence de chaque alésage de cylindre (2).

3. Joint métallique selon la revendication 1, dans lequel lesdites portions repliées (5) sont plus épaisses à leurs parties qui se situent entre lesdits alésages de cylindre (2), et moins épaisses à leurs autres parties.

4. Joint métallique selon l'une quelconque des revendications précédentes, dans lequel les deux surfaces de ladite plaque métallique élastique (1) sont revêtues d'un matériau non métallique, tel qu'un caoutchouc résistant à la chaleur et à l'huile ou une résine résistant à la chaleur et à l'huile.

5. Joint métallique selon l'une quelconque des revendications précédentes, comprenant en outre, sur le même côté que lesdites surfaces d'extrémité en projection desdites nervures (4), des plaques métalliques supplémentaires (8) laminées sur les surfaces plates de ladite plaque métallique élastique (1) qui se trouvent sur la face radialement vers l'extérieur desdites nervures (4) pour réguler l'épaisseur de ladite plaque métallique élastique (1).

6. Joint métallique selon l'une quelconque des revendications précédentes, comprenant en outre des organes souples (7) disposés dans lesdites portions repliées (5) de ladite plaque métallique élastique (1).

7. Joint métallique selon la revendication 6, dans lequel lesdits organes souples (7) sont disposés sur toute la circonférence de chaque alésage de cylindre (2) et ont une épaisseur uniforme.

8. Joint métallique selon la revendication 6, dans lequel lesdits organes souples (7) sont disposés dans les parties desdites portions repliées (5) qui se situent entre lesdits alésages de cylindre (2) adjacents, aucun organe souple n'étant disposé dans leurs autres parties.

9. Joint métallique selon la revendication 6, dans lequel l'épaisseur desdits organes souples (7) disposés dans lesdites portions repliées (5) est plus grande aux parties de celles-ci qui se situent entre lesdits alésages de cylindre (2) adjacents qu'à leurs autres parties.

10. Joint métallique selon l'une quelconque des revendications 6 à 9, dans lequel lesdits organes souples (7) sont faits d'un matériau quelconque parmi une feuille de graphite, une feuille d'aramide, une résine et un caoutchouc.

11. Joint métallique selon l'une quelconque des revendications précédentes, comprenant en outre des plaques régulatrices (6), qui consistent en un matériau métallique, laminé sur les surfaces d'extrémité en projection desdites nervures (4) et sur les surfaces des parties de ladite plaque métallique élastique (1) qui s'étendent radialement vers l'extérieur desdites nervures (4).
